# EUROPEAN PATENT SPECIFICATION

(11) **EP 0 732 638 B1**
(45) Date of publication and mention of the grant of the patent: **28.08.2002**
(21) Application number: 96200726.6
(22) Date of filing: 18.03.1996
(51) Int. Cl.: G05B 19/418, G05B 19/042

(54) **Reception/management system for security codes, in particular for alarm and access control devices designed to operate in a civil environment**
Empfangsverwaltungssystem für Sicherheitscodes insbesondere für Alarm- und Zugangskontrollgeräte zum Betrieb in einer Zivilumgebung
Système de réception/gestion pour des codes de sécurité, particulièrement pour des dispositifs de commande d'alarme et d'accès destinés à fonctionner dans un environnement civil

(30) Priority: 17.03.1995 IT MI950530
(43) Date of publication of application: 18.09.1996
(73) Proprietor: BTICINO S.p.A., 20154 Milano (IT)
(72) Inventor: Santini,Ernesto, 28060 Sozzago ( Novara ) (IT)
(74) Representative: Fusina, Gerolamo

(56) References cited:
- EP-A- 0 320 390
- EP-A- 0 356 662
- EP-A- 0 448 087
- EP-A- 0 570 281
- WO-A-90/08418
- US-A- 4 162 486
- US-A- 4 540 890
- US-A- 4 567 557

## Description

The present invention relates to a security code based reception/management system used in particular for alarm, access control and protected functions enabling devices designed to operate in a civil environment.

The present systems used for alarm, access control and protected functions enabling systems generally imply receiving and managing security codes which the user must supply by means of various support devices such as, e.g., magnetic cards, electronic keys of electrical contact or induction type, radio or infrared transmitters. Peripheral receivers, usually connected in star mode, with a point-to-point connection pattern, with an electronic control unit containing the list of authorized security codes, are provided in order to supervise the individual functions provided for the reception/management system.

The peripheral receivers are usually specialized for one single specific function to be controlled inside the interior of the system.

The communication between the security code support devices and the system can be of either unidirectional, or bidirectional type. For example, EP-A-0570281 and EP-A-0320390 show the features of the preamble of claim 1.

The support devices for the security codes can be supplied already encoded by the manufacturer, or they can be encoded at a later time, through apparatuses not connected to the reception/management system, or can be encoded by the same system through particular procedures.

However, the particular arrangement of the peripheral receivers and the structure of their connections with the electronic control unit require that a complex and articulated wiring system is laid down, associated with a substantial rigidity of positioning of the individual receiver devices.

Adding new receiver units furthermore requires that further connecting lines are installed in order to connect each of them with the electronic control unit.

Furthermore, the number and the complexity of the cases and of the mechanical solutions for fastening and installing said receiver devices are such as to further increase the wiring difficulty.

Finally, the large number of available methodologies for managing and supporting the security codes renders practically unfeasible manufacturing integrated, multifunctional devices for alarm, access control and protected functions enabling.

The purpose of the present invention is of providing a reception/management system for security codes which addresses the above problems, realizing a coordinated whole of devices for code reception and management methodologies for said codes.

Another purpose of the present invention is of providing a reception/management system for receiving and managing security codes by using single wiring technologies, bidirectional communication methodologies and univocal mechanical solutions, which allow the size and amount of wiring harness to be reduced and a high degree of flexibility and installation to be achieved together with a high level of integration of the devices and functionality of security code generation and recognition, as compared to the solutions known from the prior art.

Not least purpose of the invention is of providing a reception/management system for security codes which is easy and cheap to be produced and installed, with no need for complex or expensive technologies.

These and further purposes are achieved by a code reception/management system according to the invention, as defined in claim 1.

The security code reception/management system according to the present invention provides for use of a communication line (in the following referred to as a "bus") of bifilar type with which the components of the alarm, access control and protected functions activation devices are connected through connection lines.

In particular, the use of bifilar buses for connecting the peripheral receivers for security codes with an electronic control unit of the reception/management system designed to encode and recognize codes, makes it possible the amount and size of the connection harness to be substantially decreased with the flexibility being increased of the same system which, in that way, will comprise a large number of different functionalities to be performed with only a limited number of different device types.

The expansion of the system is secured within limits only dictated by the capacity of the bus, with having access to both bus wires at a whatever point along the line being all what is needed in order to install new access devices in the system.

Furthermore, the peripheral receivers and the actuators are all of a same type, tailored to the several functional requirements through a specific local configuration.

Furthermore, the method for generating and recognizing the security codes is the same for all of the functions controlled by the reception/management system.

Further purposes and advantages of the present invention will be clear from the following disclosure and from the accompanying drawings, supplied for merely exemplifying, non-limitative purposes, in which:
Figure 1 represents a block diagram of a security code reception/management system for devices performing, among others, the functions of anti-intrusion alarm, door opening and protected functions enabling;
Figure 2 shows a block diagram of the internal structure of a receiver device for security codes provided for the system shown in Figure 1;
Figure 3 shows a block diagram of the internal structure of an actuator module provided for the system of Figure 1.

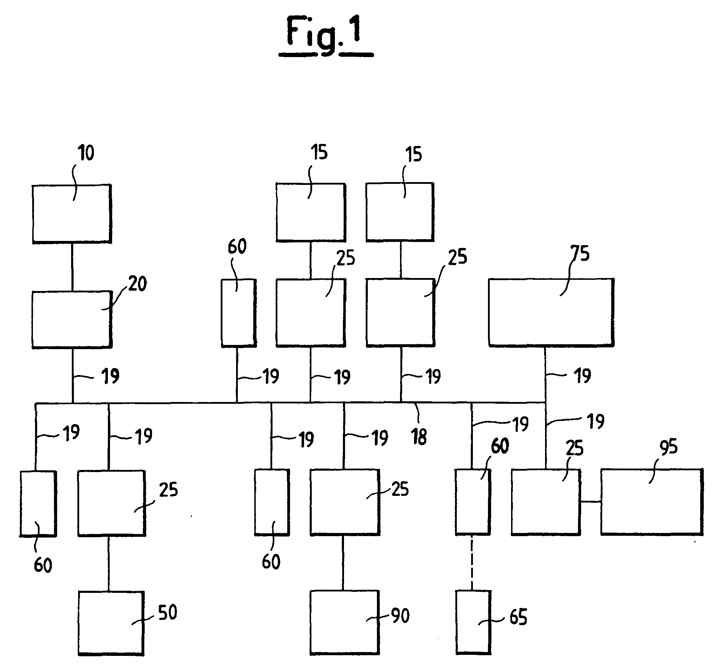

Referring to Figure 1, the reception/management system according to the present invention comprises:
a power supply unit (20) which feeds the system with a direct voltage comprised within the range of from 20 to 30 Volts, arranged inside a modular case for flush mount complying with the presently applicable DIN specifications and connected with the electrical power distribution mains (10) on the one side and, at the other side, with a bifilar bus (18), through a connection line (19);
peripheral receivers (60) designed to receive security codes, connected, by means of connecting lines (19), with the bus (18), which acquire the information data through infrared communication signals;
a remote control unit (65) used in order to perform said communication and provided with enabling push-buttons;
an electronic control unit (75) designed to encode the commands sent by the remote control unit (65) and then recognize the security codes and connected, through one of said lines (19), with said bus (18);
auxiliary devices, as actuators (25) connected with said bus (18) by means of one of said connecting lines (19) and provided with relais for actuating motor units (15), for the operation of a programmable timer-thermostatting unit (95), for opening an electromagnetic lock (50), for sectioning electrical loads (90).

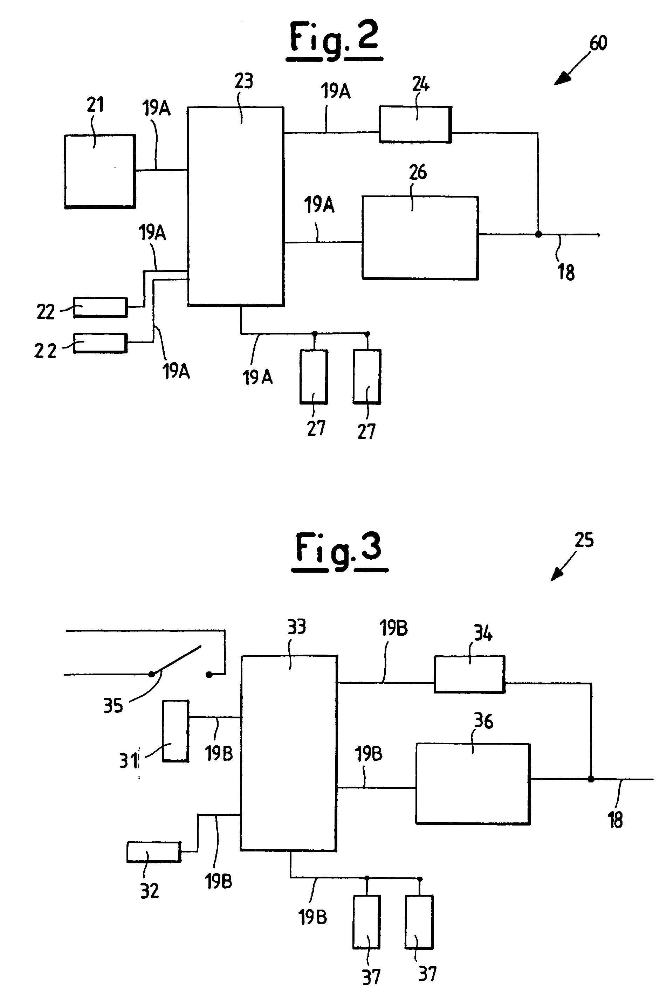

Referring to Figure 2, the reference numeral (21) indicates a block comprising a receiver device (typically a diode receiving at infrared wavelengths) and the relevant circuit for processing the analog signal and converting it into a digital signal, the reference numeral (22) indicates two LED diodes for visually signalling the operating state of the block (21), the reference numeral (23) indicates an electronic microcontroller, the reference numeral (24) indicates a power feed circuit for the microcontroller (23); (26) indicates an electronic circuit which performs the interface functions for the transmission towards the bifilar bus (18) and reception from said bus (18); and the reference numeral (27) indicates two resistors used for configuration purposes and for defining the particular address of a specific security code. The microcontroller (23) is connected with the bifilar bus (18), the resistors (27), the LED diodes (22) and the receiver device (21) through connection lines (19A).

Referring to Figure 3, the reference numeral (35) indicates a two-way switch associated with a relay (31), (32) is a LED diode for visually signalling the operating state of the actuator (25), the reference numeral (33) indicates an electronic microcontroller, (34) indicates a power feed circuit for the microcontroller (33); (36) indicates an electronic circuit which performs the interface functions for transmission towards the bifilar bus (18) and reception from said bus (18), and with (37) two resistors are indicated which are used for configuration purposes and for defining the particular address of a specific security code. The microcontroller (33) is connected with the bifilar bus (18), the resistors (37), the LED diode (32) and the relay (31) by means of connection lines (19B).

The integrated system of Figure 1 according to the present invention operates as follows.

As soon as the user, on coming back to her/his home actuates (pushes) a push-button of the remote control unit (65), (s)he causes the transmission to take place of the security code, through an infrared light beam, towards a receiver (60) installed inside a flush-mount box situated at the entrance door.

The receiver (60) can perform immediately the recognition, through a copy of the security codes which are stored in a local storage, or it can interrogate the electronic control unit (75) in order to receive, thereafter, the authorization to operate.

Following all that, the receiver (60) sends a message to the actuator (25) connected with the electromagnetic lock (50), in order to cause the door opening.

The user can now enter her/his home.

A subsequent actuation of a push-button of the remote control unit (65), orientated towards a second receiver (60) installed inside the user's house, enables another device of the system (for example, it switches off the anti-intrusion alarm).

Further receivers (60) can then be dedicated to the control of delicate operations, in order to prevent either fortuitous or malicious operations, to the programmation of a timer-thermostat (95), to sectioning particular electrical loads (90), to actuating motor units (15) (for example, for the centralized shutting of the roll shutters of the house).

The operation of these devices is commanded by means of repeatedly pushing on the same push-button, or by actuating different push-buttons of the remote control unit (65), which is orientated towards the specific peripheral receiver (60) which performs the desired function.

The remote control unit (65) is sold devoid of the security code; the electronic control unit (75), through bidirectional I.R. communication signals and a suitable generation algorithm, which exploits casual parameters such as, e.g., the time from switching on, or from the last actuation of a push button of the remote control unit (65), after being put in programming state, encodes the different remote control unit (65) by means of codes consisting of very long sequences of alphanumerical characters, to guarantee the full security of the whole reception/management system.

All the above is carried out by means of simple operations to be enabled by the. same user which furthermore may change the security codes every time (s)he will regard it to be so useful, even if (s)he does not know them.

The guarantee of the security operations is committed to having available a further remote control unit (65) having a recognized reference code; a particular sequence of operations, carried out during the installation of the electronic control unit (75) enables it to accept as valid for being encoded, also the not yet encoded remote control units (65).

From the above disclosure, the characteristics and features will be clear of the security codes reception/management system according to the present invention, as well as the advantages offered by it.

In particular, such characteristics and features are as follows:
- the connection of the alarm, access control and protected functions enabling devices of the system takes place through a bifilar bus capable of securing simultaneously data communication and power feed: this feature results in a considerable decrease in connecting harness amount and size and a high degree of flexibility of the system as regards the installation of new devices (within the load limits provided for said bus) or the replacement of some of them;
- the peripheral receivers and the actuators are all of a same type.

The installer configures each individual receiver or actuator for a specific primary function, by directly acting on the same device: this feature results in the possibility of arranging an integrated system provided with a plurality of functionalities, consisting of a limited number of types of devices;
- the peripheral receivers and actuators are mechanically suitable for using the installation accessories and the lines provided for electrical appliances in civil environment (dwelling premises, offices and so on) of modular type, for flush mount (recessed boxes, frames, and so forth): this feature renders easy and comfortable the installation of the system (because modules are standardized); ergonomic the use of the system; and positive the aesthetical solution -- an important feature above all if these devices are used within dwelling premises;
- the security codes generation, reception and recognition method is simple, only one and standard for all functions controlled by the system.

It is clear that many modifications can be supplied to the integrated communication system according to the present invention. Also it is clear that in the practical implementation of the present invention the materials, shapes and sizes of the illustrated details can be whichever according to the requirements and to said materials.

## Claims

1. A security code based reception/management system comprising protected functions, said system having the capability to enable and/or disable devices and being suitable for use, for example, in anti-intrusion alarms and access controls, whereby said system is designed for use in a civil/domestic environment, said system further comprising:
- at least one electrical power supply unit (20), to be connected with an electric power distribution mains (10);
- at least one transmitter device (65), which generates and transmits a set of encoded signals by means of the actuation of at least one push-button by a user;
- a plurality of receiver means (60), at least one of which receives said set of encoded signals transmitted by said transmitter device (65);
- one electronic control unit (75), which manages said system;
- at least one actuator means (25), each actuator means (25) enabling/governing either a motor unit (15), a programmable electronic apparatus (95), a mechanical device (50) or an electric load (90),
wherein said power supply unit (20), said receiver means (60) and said actuator means (25) are each connected, by means of connection lines (19), to a bifilar bus (18), which simultaneously performs data communication and power feed functions, and which is connected to said electronic control unit (75), **characterised in that** said receiver means (60) each include a local storage, in which copies of security codes are stored, whereby each receiver means (60) performs comparison recognition of said stored security codes with security codes comprised in said set of encoded signals transmitted by said transmitter device (65), and **in that** the receiver means (60) subsequently send a message to at least one actuator means (25) in order to cause said actuator means (25) to operate.

2. The reception/management system according to claim 1, **characterised in that** said comparison/recognition procedures for said authorised security codes are identical for all the functions performed by the system.

3. The reception/management system according to claim 1, **characterised in that** said power supply unit (20), said receiver means (60), said electronic control unit (75) and said actuator means (25) are mechanically integrated and flush mounted within a modular case following the convention for civil/domestic installations of the modular type and in compliance with the presently applicable DIN standards.

4. The reception/management system according to claim 1, **characterised in that** said receiver means (60) and said actuator means (25) are installed as part of the system by providing access, along the length of said bifilar bus (18), to the two wires comprising said bifilar bus (18).

5. The reception/management system according to claim 1, **characterised in that** said receiver means (60) and said actuator means (25) consist of identical modules, each of said modules being locally configured to perform its respective function.

## Patentansprüche

1. Auf einem Sicherheitscode basierendes Zulassungs/Verwaltungssystem mit geschützten Funktionen, das die Fähigkeit hat, Einrichtungen freizugeben und/oder zu sperren und zur Verwendung z.B. in Alarmanlagen gegen Einbruch und für Zugangskontrollen geeignet ist, wobei das System zur Verwendung in einer zivilen/häuslichen Umgebung gestaltet ist, und wobei das System ferner umfasst:
- mindestens eine Zufuhreinheit (20) für elektrische Energie zur Verbindung mit einer Hauptverteilungsleitung (10) für elektrische Energie;
- mindestens eine Sendeeinrichtung (65), die durch die Betätigung mindestens eines Druckknopfes durch einen Anwender einen Satz von verschlüsselten Signalen erzeugt und sendet;
- eine Mehrzahl von Empfangseinrichtungen (60), von denen mindestens eine den von der Sendeeinrichtung (65) gesendeten Satz von verschlüsselten Signalen empfängt;
- eine elektronische Steuereinheit (75), die das System verwaltet;
- mindestens eine Betätigungseinrichtung (25), wobei jede Betätigungseinrichtung (25) entweder eine Motoreinheit (15), eine programmierbare elektronische Vorrichtung (95), eine mechanische Einrichtung (50) oder eine elektrische Last (90) freigibt/steuert,
wobei die Energiezufuhreinheit (20), die Empfangseinrichtungen (60) und die Betätigungseinrichtung (25) jeweils durch Verbindungsleitungen (19) mit einem bifilaren Bus (18) verbunden sind, der gleichzeitig Datenübermittlungs- und Energiezufuhrfunktionen ausführt, und der mit der elektronischen Steuereinheit (75) verbunden ist, **dadurch gekennzeichnet, dass** die Empfangseinrichtungen (60) jeweils einen lokalen Speicher umfassen, in dem Kopien von Sicherheitscodes gespeichert sind, wobei jede Empfangseinrichtung (60) einen Vergleich/eine Erkennung dieser gespeicherten Sicherheitscodes mit Sicherheitscodes durchführt, die in dem von der Sendeeinrichtung (65) gesendeten Satz von verschlüsselten Signalen enthalten sind, und dadurch, dass die Empfangseinrichtungen (60) anschließend eine Nachricht an die mindestens eine Betätigungseinrichtung (25) senden, um eine Betätigung der Betätigungseinrichtung (25) zu verursachen.

2. Zulassungs/Verwaltungssystem nach Anspruch 1, **dadurch gekennzeichnet, dass** die Vergleichs/Erkennungsverfahren für die autorisierten Sicherheitscodes für alle von dem System durchgeführten Funktionen identisch sind.

3. Zulassungs/Verwaltungssystem nach Anspruch 1, **dadurch gekennzeichnet, dass** die Energiezufuhreinheit (20), die Empfangseinrichtungen (60), die elektronische Steuereinheit (75) und die Betätigungseinrichtung (25) entsprechend der Konvention für zivile/häusliche Anlagen vom modularen Typ und in Übereinstimmung mit den gegenwärtig anwendbaren DIN-Standards in einem modularen Gehäuse mechanisch integriert und bündig angebracht sind.

4. Zulassung/Verwaltungssystem nach Anspruch 1, **dadurch gekennzeichnet, dass** die Empfangseinrichtungen (60) und die Betätigungseinrichtung (25) als Teil des Systems eingebaut sind, indem entlang der Länge des bifilaren Bus (18) ein Zugang zu den zwei Kabeln bereitgestellt wird, die den bifilaren Bus (18) umfassen.

5. Zulassungs/Verwaltungssystem nach Anspruch 1, **dadurch gekennzeichnet, dass** die Empfangseinrichtungen (60) und das Betätigungsmittel (25) aus identischen Modulen bestehen, wobei jedes dieser Module zur Ausführung seiner jeweiligen Funktion lokal konfiguriert ist.

## Revendications

1. Système de réception/gestion à codes de sécurité comprenant des fonctions protégées, le système étant apte à activer et/ou désactiver des dispositif et pouvant être utilisé, par exemple, pour des alarmes anti-intrusion ou des contrôles d'accès, le système étant conçu pour un usage dans un environnement civil/domestique, le système comprenant :
- au moins une unité de production d'énergie électrique (20) prévue pour être connectée à un réseau de distribution d'électricité (10) ;
- au moins un dispositif de transmission (65) apte à générer et transmettre un jeu de signaux codés lors de la mise en marche d'au moins un bouton-poussoir par un utilisateur ;
- une pluralité de moyen de réception (60), au moins un recevant le jeu de signaux codés transmis par le dispositif de transmission (65) ;
- une unité de commande (75) qui gère le système ;
- au moins un actionneur (25), chaque actionneur (25) activant/commandant soit une unité de moteur (15), un appareil électronique programmable (95), un dispositif mécanique (50) ou une charge électrique (90),
l'unité de production d'énergie (20), les moyens de réception (60) et les actionneur (25) étant chacun connecté, par l'intermédiaire de liaisons de connexion (19), à un bus bifilaire (18) qui réalise simultanément des transmission de données et des fonctions d'alimentation en énergie, et qui est connecté à l'unité de commande (75), **caractérisé en ce que** les moyens de réception (60) comprennent chacun une mémoire locale, dans laquelle des copies des codes de sécurité sont mémorisées, chaque moyen de réception (60) réalisant une comparaison/reconnaissance des codes de sécurité enregistrés avec des codes de sécurité inclus dans lesdits jeux de signaux codés transmis par le dispositif de transmission (65), et **en ce que** les moyens de réception (60) envoient subséquemment un message à au moins un actionneur (25) de façon que cet actionneur (25) fonctionne.

2. Système de réception/gestion selon la revendication 1, **caractérisé en ce que** les procédures de comparaison/reconnaissance pour les codes de sécurité d'autorisation sont identiques pour toutes les fonctions réalisée par le système.

3. Système de réception/gestion selon la revendication 1, **caractérisé en ce que** l'unité de production d'énergie (20), les moyens de réception (60), l'unité de commande électronique (75) et les actionneurs (25) sont intégré mécaniquement et montés encastrés dans une boîte selon les normes pour les installations civil/domestiques du type module et en accord avec les standards DIN présentement applicables.

4. Système de réception/gestion selon la revendication 1, **caractérisé en ce que** les moyens de réception (60) et les actionneurs (25) sont installés comme parties du système en fournissant un accès, le long de la longueur du bus bifilaire (18), aux deux conducteurs comprenant le bus bifilaire (18).

5. Système de réception/gestion selon la revendication 1, **caractérisé en ce que** les moyens de réception (60) et les actionneurs (25) consistent en des modules identiques, chacun des modules étant configuré localement pour réaliser ses fonction respectives.
